# EUROPÄISCHE PATENTSCHRIFT

(11) **EP 0 932 522 B1**
(45) Veröffentlichungstag und Bekanntmachung des Hinweises auf die Patenterteilung: **04.06.2003**
(21) Anmeldenummer: 97913103.4
(22) Anmeldetag: 16.10.1997
(51) Int. Cl.: B60R 11/02

(54) **RUNDFUNKEMPFÄNGER**
RADIO RECEIVER
RECEPTEUR RADIO

(30) Priorität: 26.10.1996 DE 19644648
(43) Veröffentlichungstag der Anmeldung: 04.08.1999
(73) Patentinhaber: ROBERT BOSCH GMBH, 70442 Stuttgart (DE)
(72) Erfinder: PITZ, Gerhard, D-31139 Hildesheim (DE); MADER, Thomas, D-31139 Hildesheim (DE); KOTTSCHLAG, Gerhard, D-31139 Hildesheim (DE); GIBRON, JIRI, 30966 Hemmingen (DE); LESCH, ALFONS, 31139 Hildesheim (DE)
(86) Internationale Anmeldenummer: DE9702373
(87) Internationale Veröffentlichungsnummer: WO98018654

(56) Entgegenhaltungen:
- EP-A- 0 358 814
- EP-A- 0 483 956
- EP-A- 0 580 505
- DE-U- 9 409 902
- US-A- 4 103 983
- US-A- 4 113 217
- US-A- 4 558 172

## Beschreibung

### Stand der Technik

Die Erfindung geht von einem Rundfunkempfänger nach der Gattung des Hauptanspruchs aus. Ein derartiget Rundfunkempfänger mit integrierter Fernsprecheinrichtung zum Einsatz in einem Kraftfahrzeug ist aus EP-A-0 483 956 bekannt. Für die Zuführung eines Antennenkabels weist der Rundfunkempfänger üblicherweise einen Antennenanschluß an einer seiner Gehäusewände auf.

### Vorteile der Erfindung

Der erfindungsgemäße Rundfunkempfänger mit den Merkmalen des Hauptanspruchs hat demgegenüber den Vorteil, daß der Antennenanschluß in paralleler Richtung oder in kleinem Winkel zu der Gehäuserück- oder -seitenwand für die Zuführung eines Antennenkabels verläuft und in einer Ausbuchtung der Gehäuserück- oder -seitenwand angeordnet ist. Auf diese Weise wird eine platzsparende Zuführung des Antennenkabels zum Gehäuse des Rundfunkempfängers ermöglicht, wohingegen insbesondere bei einer senkrechten Zuführung des Antennenkabels zur Gehäusewand zulässige Biegeradien der Antennenkabel zu beachten sind. Diese Platzersparnis wirkt sich besonders bei der Verwendung des Rundfunkempfängers als Autoradio aus, da der nutzbare Raum des Einbauschachtes für das Autoradio bei paralleler Zuführung des Antennenkabels zur Geräterückwand im Vergleich zur senkrechten Zuführung des Antennenkabels erheblich vergrößert werden kann, so daß beispielsweise der Einbau von Kassetten- und/oder CD-Laufwerken in das Autoradio weniger Platzbeschränkungen unterworfen ist.

Diese Platzersparnis ist insbesondere dann als vorteilhaft zu bewerten, wenn der Antennenanschluß für das Funktelefon bereits vergleichsweise großvolumig ist. In diesem Fall wird der nutzbare Raum durch die Zuführung des Antennenkabels nicht weiter verringert.

Durch die in den Unteransprüchen aufgeführten Maßnahmen sind vorteilhafte Weiterbildungen und Verbesserungen des im Hauptanspruch angegebenen Rundfunkempfängers möglich.

Besonders vorteilhaft ist ein drehbarer Antennenanschluß. Auf diese Weise wird ein flexibler, den räumlichen Bedingungen angepaßter Zugang des Antennenanschlusses für das Antennenkabel ermöglicht.

Vorteilhaft ist auch, daß das Gehäuse des Rundfunkempfängers an der Stelle des Antennenanschlusses einen Vorsprung gegenüber der Gehäuserück- oder -seitenwand aufweist, in dem der Antennenanschluß untergebracht ist. Auf diese Weise ist der Antennenanschluß besser vor Umwelteinflüssen geschützt.

Vorteilhaft ist außerdem die Montage des Antennenanschlusses auf einer Platine des Rundfunkempfängers. Auf diese Weise wird die Herstellung des Rundfunkempfängers vereinfacht, da die Montage des Antennenanschlusses bereits zusammen mit der Bestückung der Platine in einem Arbeitsschritt erfolgen kann. Dadurch werden außerdem Kosten eingespart.

Vorteilhaft ist die Verbindung des Antennenanschlusses mit dem Funktelefon und einem Rundfunkempfangsteil über eine Antennenweiche. Auf diese Weise ist nur ein einziger Antennenanschluß für den Telefonbetrieb und den Rundfunkempfang erforderlich, so daß Platz, Aufwand, Material und Kosten bei der Herstellung eingespart werden.

### Zeichnung

Ausführungsbeispiele der Erfindung sind in der Zeichnung dargestellt und in der nachfolgenden Beschreibung näher erläutert. Es zeigen Figur 1 einen Rundfunkempfänger mit senkrechter Antennenkabelzuführung nach dem Stand der Technik, Figur 2 einen Rundfunkempfänger mit paralleler Antennenkabelzuführung, Figur 3 einen drehbaren Antennenanschluß und Figur 4 einen in das Gehäuse des Rundfunkempfängers integrierten Antennenanschluß.

### Beschreibung des Ausführungsbeispiels

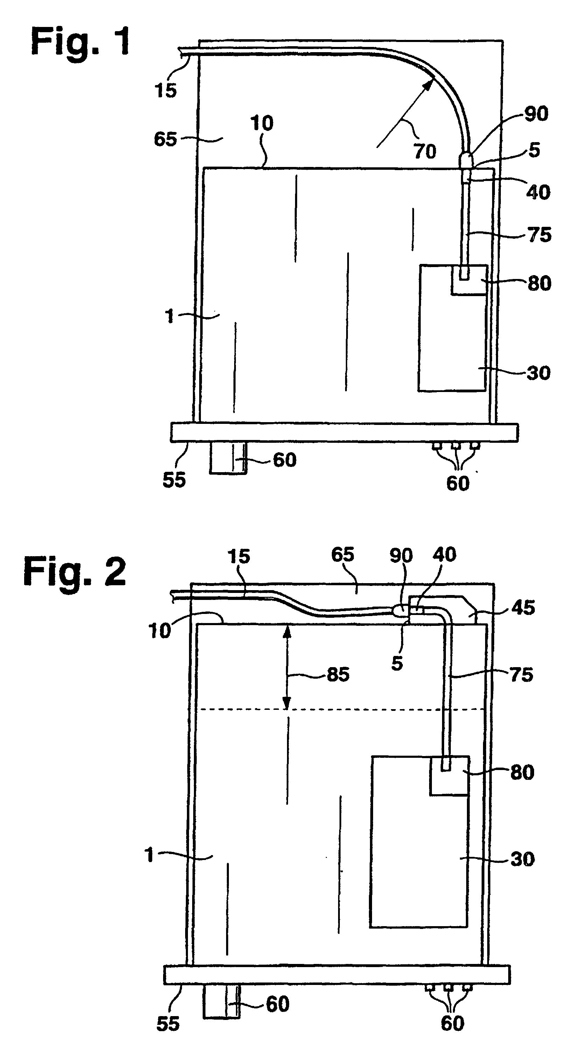

In Figur 1 kennzeichnet 1 einen als Autoradio ausgebildeten Rundfunkempfänger, der eine Bedienfront 55 mit Bedienelementen 60 aufweist. Der Rundfunkempfänger 1 ist in einem Einbauschacht 65 untergebracht. Der Einbauschacht 65 wird durch die von außen zugängliche Bedienfront 55 abgedeckt. An einer Gehäuserückwand 10 des Rundfunkempfängers 1 ist ein Antennenanschluß 5 angebracht, der eine senkrecht zur Gehäuserückwand 10 verlaufende Buchse 40 für die Zuführung eines Antennenkabels 15 aufweist. Anstelle der Buchse 40 kann auch ein Steckkontakt vorgesehen sein. Das Antennenkabel 15 ist der Buchse 40 senkrecht zur Gehäuserückwand 10 zugeführt und über einen Biegeradius 70 zu einem Viertelkreis gebogen, so daß das Antennenkabel 15 den Einbauschacht 65 parallel zur Gehäuserückwand 10 verläßt. Die Buchse 40 ist über ein Verbindungskabel 75 innerhalb des Rundfunkempfängers 1 mit einer Anschlußbuchse 80 eines in dem Rundfunkempfänger 1 integrierten Funktelefons 30 verbunden. Dabei kann die Anschlußbuchse 80 auf eine Platine des Funktelefons 30 gelötet sein. Durch die Verbindung des Antennenanschlusses 5 mit der Anschlußbuchse 80 des Funktelefons 30 über ein Verbindungskabel 75 findet eine Zugentlastung statt, so daß die Anschlußbuchse 80 nach der Fertigung nicht mehr mechanisch belastet wird. Der Anschluß des Antennenkabels 15 an den Antennenanschluß 5 erfolgt durch Einführung des Steckers 90 des Antennenkabels 15 in die Buchse 40 des Antennenanschlusses 5.

Die Darstellung gemäß Figur 1 stellt eine herkömmliche Realisierung der Antennenkabelzuführung bei einem in einem Einbauschacht 65 befindlichen Autoradio dar. In Figur 2 ist der Antennenanschluß 5 des Rundfunkempfängers 1 mit einer in paralleler Richtung zur Gehäuserückwand 10 verlaufenden Buchse 40 für die Zuführung des Antennenkabels 15 ausgestattet. Dabei befindet sich der Antennenanschluß 5 in einer Ausbuchtung 45 der Gehäuserückwand 10. Die Ausbuchtung 45 kann dabei auch als an die Gehäuserückwand 10 angebrachtes Winkelteil ausgeführt sein. Das Antennenkabel 15 ist somit dem Antennenanschluß 5 parallel zur Gehäuserückwand 10 zuführbar, so daß sich bei gleichen Abmessungen des Einbauschachtes 65 wie in Figur 1 in Einschubrichtung der durch den Doppelpfeil mit dem Bezugszeichen 85 gekennzeichnete Platzgewinn ergibt, der dem Biegeradius 70 entspricht und eine entsprechende Vergrößerung des Gehäusevolumens des Rundfunkempfängers 1 wie in Figur 2 dargestellt ermöglicht. Auf diese Weise lassen sich Laufwerke für Kassetten- und/oder CD-Betrieb einfacher in den Rundfunkempfänger 1 einbauen, da der nutzbare Raum im Einbauschacht 65 größer ist. Die parallele Zuführung des Antennenkabels 15 zum Antennenanschluß 5 erfordert eine Viertelkreisbiegung des Verbindungskabels 75, damit dieses im Gehäuse des Rundfunkempfängers 1 zugänglich ist und an die Anschlußbuchse 80 des Funktelefons 30 angeschlossen werden kann. Die Biegung der Antennekabelzuführung wird somit in das Gehäuse des Rundfunkempfängers 1 verlagert, so daß sich der beschriebene Platzgewinn ergibt. Eine Biegung des Verbindungskabels 75 ist außerdem weniger kritisch als eine Biegung des Antennenkabels 15, da das Verbindungskabel 75 dünner und flexibler ist.

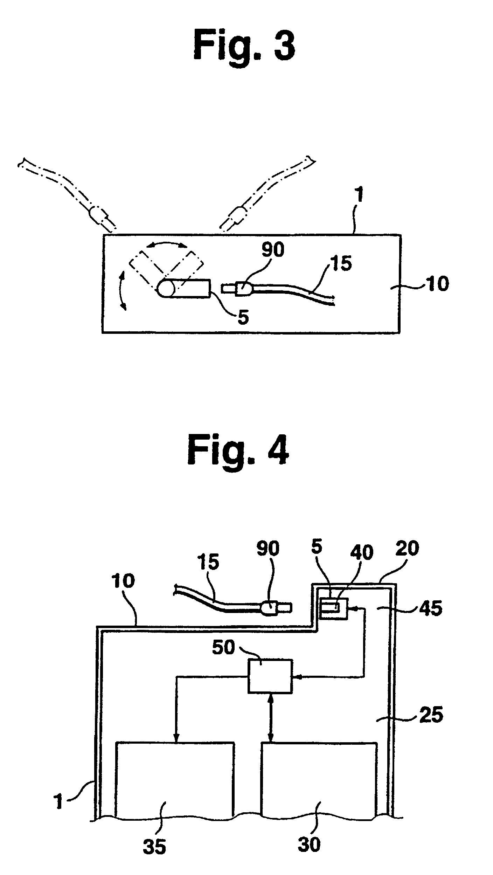

In einem weiteren Ausführungsbeispiel (Ausbuchtung 45 nicht dargestellt) gemäß Figur 3 ist der Antennenanschluß 5 drehbar mit der Gehäuserückwand 10 verbunden. Dabei sind beliebige Drehpositionen einstellbar, was durch die beiden Doppelpfeile in Figur 3 dargestellt ist. Da die Drehachse senkrecht zur Gehäuserückwand 10 verläuft, erfolgt die Zuführung des Antennenkabels 15 zum Antennenanschluß 5 stets parallel zur Gehäuserückwand 10. Durch Einstellen der Drehposition des Antennenanschlusses 5 kann die Antennenkabelzuführung den räumlichen Gegebenheiten des Rundfunkempfängers 1 im Einbauschacht 65 oder einer anderen Einbauvorrichtung angepaßt werden.

Ein weiteres Ausführungsbeispiel ist in Figur 4 dargestellt. Dabei weist das Gehäuse des Rundfunkempfängers 1 an der Stelle des Antennenanschlusses 5 einen Vorsprung 20 gegenüber der Gehäuserückwand 10 auf, der die für die Unterbringung des Antennenanschlusses 5 erforderliche Ausbuchtung 45 der Gehäuserückwand 10 bildet. Dabei ist der Antennenanschluß 5 mit seiner Buchse 40 auf einer Platine 25 des Rundfunkempfängers 1 montiert. Auf der Platine 25 des Rundfunkempfängers 1 sind weiterhin die Module des Funktelefons 30 sowie die Baugruppen eines Rundfunkempfangsteils 35 montiert. Über eine Antennenweiche 50 sind der Rundfunkempfangsteil 35 und das Funktelefon 30 mit dem Antennenanschluß 5 verbunden, so daß der Antennenanschluß 5 sowohl für Rundfunkempfang als auch für den Sende- und Empfangsbetrieb des Funktelefons 30 verwendet werden kann. Anstelle der Antennenweiche kann auch ein Antennenschalter verwendet werden.

In weiteren, nicht dargestellten Ausführungsbeispielen ist es auch möglich, den Antennenanschluß in erfindungsgemäßer Weise statt an der Gehäuserückwand 10 an einer Seitenwand des Gehäuses des Rundfunkempfängers 1 anzubringen. Weiterhin kann statt der parallelen Antennenkabelzuführung auch eine Zuführung des Antennenkabels 15 in kleinem vorzugsweise spitzen Winkel zu der entsprechenden Gehäusewand erfolgen, wobei jedoch im Vergleich zur parallelen Antennenkabelzuführung weniger Platzgewinn möglich ist. Eine Anbringung des Antennenanschlusses 5 an einer Seitenwand des Gehäuses des Rundfunkempfängers 1 hängt von den räumlichen Gegebenheiten des Einbauschachtes 65 bzw. des Einbauortes des Rundfunkempfängers 1 ab.

## Patentansprüche

1. Rundfunkempfänger (1), insbesondere Autoradio, in den ein Funktelefon (30) integriert ist, mit einem Antennenanschluß (5) an einer Gehäuserück- oder seitenwand (10) des Rundfunkempfängers (1), **dadurch gekennzeichnet, daß** der Antennenanschluß (5) in paralleler Richtung oder in kleinem Winkel zu der Gehäuserück- oder -seitenwand (10) für die Zuführung eines Antennenkabels (15) verläuft und daß der Antennenanschluß (5) in einer Ausbuchtung (45) der Gehäuserück- oder -seitenwand (10) angeordnet ist.

2. Rundfunkempfänger (1) nach Anspruch 1, **dadurch gekennzeichnet, daß** der Antennenanschluß (5) drehbar ist.

3. Rundfunkempfänger (1) nach Anspruch 1 oder 2, **dadurch gekennzeichnet, daß** das Gehäuse des Rundfunkempfängers (1) an der Stelle des Antennenanschlusses (5) einen Vorsprung (20) gegenüber der Gehäuserück- oder -seitenwand (10) aufweist, der die für die Urterbringung des Antennenanschlusses (5) erforderliche Ausbuchtung (45) der Gehäusezückwand bildet.

4. Rundfunkempfänger (1) nach Anspruch 1, 2 oder 3, **dadurch gekennzeichnet, daß** der Antennenanschluß (5) auf einer Platine (25) des Rundfunkempfängers (1) montiert ist.

5. Rundfunkempfänger (1) nach einem der vorherigen Ansprüche, **dadurch gekennzeichnet, daß** der Antennenanschluß (5) mit dem Funktelefon (30) und mit einem Rundfunkempfangsteil (35) über eine Antennenweiche oder einen Antennenschalter (50) verbunden ist.

## Claims

1. Broadcast radio receiver (1), particularly a car radio, incorporating a radio telephone (30), having an antenna connection (5) on a housing rear or side wall (10) for the broadcast radio receiver (1), **characterized in that** the antenna connection (5) runs in a parallel direction or at a slight angle with respect to the housing rear or side wall (10) for the purpose of supplying an antenna cable (15), and **in that** the antenna connection (5) is arranged in a bulge (45) on the housing rear or side wall (10).

2. Broadcast radio receiver (1) according to Claim 1, **characterized in that** the antenna connection (5) is rotatable.

3. Broadcast radio receiver (1) according to Claim 1 or 2, **characterized in that** the housing of the broadcast radio receiver (1) has a projection (20) opposite the housing rear or side wall (10) at the point of the antenna connection (5), which projection forms the bulge (45) on the housing rear wall which is required for accommodating the antenna connection (5).

4. Broadcast radio receiver (1) according to Claim 1, 2 or 3, **characterized in that** the antenna connection (5) is mounted on the circuit board (25) for the broadcast radio receiver (1).

5. Broadcast radio receiver (1) according to one of the preceding claims, **characterized in that** the antenna connection (5) is connected to the radio telephone (30) and to a broadcast radio reception part (35) via an antenna splitter or an antenna switch (50).

## Revendications

1. Récepteur radio (1) notamment autoradio intégrant un radio téléphone (30) et comportant un branchement d'antenne (5) sur la paroi arrière ou latérale (10) du boîtier du récépteur radio (1),
**caractérisé en ce que**
le branchement d'antenne (5) est parallèle ou avec un faible angle par rapport à la paroi arrière ou latérale (10) du boîtier pour l'arrviée d'un câble d'antenne (15), et
le branchement d'antenne (5) est prévu dans un développement (45) de la paroi arrière ou latérale (10) du boîtier.

2. Récepteur radio (1) selon la revendication 1, **caractérisé en ce que**
le branchement d'antenne (5) est tournant.

3. Récepteur radio (1) selon la revendication 1 ou 2,
**caractérisé en ce que**
le boîtier du récepteur radio (1) comporte à l'endroit du branchement d'antenne (5) une partie en saillie (2) par rapport à la paroi arrière ou latérale (10) du boîtier formant le développement (45) de la paroi du boîtier nécessaire au logement du branchement d'antenne (5).

4. Récepteur radio (1) selon les revendications 1, 2 ou 3,
**caractérisé en ce que**
le branchement d'antenne (5) est monté sur une platine (25) du récepteur radio (1).

5. Récepteur radio (1) selon l'une des revendications précédentes,
**caractérisé en ce que**
le branchement d'antenne (5) est relié au radio téléphone (30) et à la partie récepteur (35) de la radio par un aiguillage d'antenne ou un commutateur d'antenne (50).
